(19) Europäisches Patentamt

European Patent Office

Office européen des brevets

(11) **EP 4 575 443 A1**

(12) **EUROPEAN PATENT APPLICATION**

(43) Date of publication:
**25.06.2025 Bulletin 2025/26**

(21) Application number: **24218967.8**

(22) Date of filing: **11.12.2024**

(51) International Patent Classification (IPC):
**G01M 3/24** *(2006.01)* **G01M 3/28** *(2006.01)*

(52) Cooperative Patent Classification (CPC):
**G01M 3/243; G01M 3/2815**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.12.2023 US 202318391549**

(71) Applicant: **Honeywell International Inc.
Charlotte, NC 28202 (US)**

(72) Inventors:
• **SRIVASTAVA, Avinav**
**Charlotte, 28202 (US)**
• **SINGHVI, Shalu**
**Charlotte, 28202 (US)**

(74) Representative: **Haseltine Lake Kempner LLP
Cheapside House
138 Cheapside
London EC2V 6BJ (GB)**

(54) **INTELLIGENT LEAK DETECTION IN WATER DISTRIBUTION NETWORK**

(57) Methods, systems and sensors for real-time leak detection in a water distribution network can involve extracting acoustic leak signals using ultrasonic sensing and performing one or more of the following operations: identifying acoustic noise signals generated by a leak, wherein the acoustic noise signals are analyzed to localize and determine a location of the leak, acoustic sensing in a water meter using a plurality of independent acoustic sensors, wherein acoustic data generated by the plurality of independent acoustic sensors is analyzed for leak detection data associated with the leak, and measuring water pressure, wherein pressure data generated as a result of measuring the water pressure is analyzed for leak detection data associated with the leak.

FIG. 5

## Description

TECHNICAL FIELD

Embodiments are generally related to methods, systems and devices for detecting leaks in water distribution networks. Embodiments also relate to the use of ultrasonic sensors and the pressure measurement for detecting water leaks in a water distribution network.

BACKGROUND

Globally, a substantial 40% loss of potable water stems from deficiencies within water networks, where water leaks play a prominent role in exacerbating the problem. Presently, utility companies are confronted with a formidable $14 billion challenge attributed to non-revenue water loss. In response to this pressing issue, these companies are actively exploring innovative and 'intelligent' solutions to effectively address and rectify water network inefficiencies.

Currently, there are a few techniques for leak detection, which includes long hours of monitoring and in industrial situations, expensive sensing methods. Domestic water meters and water meter solutions employ various approaches for detecting water leaks. Some methods involve leveraging the intelligence of the meter itself to directly identify leaks, while others rely on data transmitted by the water meter to a central data collector and analyze the water usage profile.

Current leak detection methods involve leak detection based on flow monitoring or night line data techniques. Leak Detection based on flow rate monitoring is one of the basic methods for leak detection where digital water meter monitors flow rate beyond threshold water flow rate and for provided duration. For example, if water flow is maintained continuously for > 5 lt/h and for 72 Hrs duration which is not a usual usage pattern, this may result in detection of a leak event. This method is reactive and takes a very long time for leak detection and performs only internal leak detection.

Night line data techniques, on the other hand, can be employed when the water meter provides water consumption information to a head end data collector, which can then provide high resolution night line data which are considered as rare water consumption duration. If night line data shows consumption consistently, this can be considered as leak event. This method is also a reactive method for leak detection and sometime infers incorrect information, even if users are consuming water due to, for example, their global work timings.

Note that night line data, in the context of leak monitoring, typically refers to data collected during nighttime hours when water consumption is expected to be at its lowest. This data can be useful for identifying potential water leaks in the distribution system. During nighttime hours, when most people are not actively using water (e.g., sleeping), water usage should be relatively minimal. Any significant water flow during this time might indicate a leak. Leak detection systems can analyze the flow data from water meters during these hours. If the flow exceeds a certain threshold, it can be flagged as a potential leak.

Not all nighttime flows indicate leaks. Some can be due to legitimate activities like filling a pool, running a dishwasher, or even small, intermittent use like flushing a toilet. This can lead to false alarms. On the other hand, small leaks might not always be detectable during low-usage periods. If a leak is too minor to register during the night, it could go undetected. Nighttime water usage patterns can vary significantly, making it challenging to set a universal threshold for leak detection. What may be considered normal in one area may not be in another.

Furthermore, in some regions, nighttime water usage can be higher due to factors like industrial or agricultural activity. The system might interpret this as a leak when it is not. The method may not account for seasonal variations in water usage. For example, during summer, people might use more water during the night for irrigation, and this might not be indicative of a leak. This method primarily relies on data analysis, which might not provide real-time information about the leak, delaying the response time.

BRIEF SUMMARY

The following summary is provided to facilitate an understanding of some of the features of the disclosed embodiments and is not intended to be a full description. A full appreciation of the various aspects of the embodiments disclosed herein can be gained by taking the specification, claims, drawings, and abstract as a whole.

It is, therefore, one aspect of the embodiments to provide for methods, systems and devices for detecting a leak in a water distribution network.

It is another aspect of the embodiments to provide for a leak detection method and system involving water leak generated acoustic noise sensing.

It is yet another aspect of the embodiments to provide for a leak detection method and system involving acoustic sensing in water meters using independent acoustic sensors.

It is also an aspect of the embodiments to provide for methods and systems for leak detection involving water pressure measurement.

The aforementioned aspects and other objectives can now be achieved as described herein. In an embodiment, a method for real-time leak detection in a water distribution network, can involve extracting acoustic leak signals using ultrasonic sensing; and performing one or more of the following operations: identifying acoustic noise signals generated by a leak, wherein the acoustic noise signals are analyzed to localize and determine a location of the leak; acoustic sensing in a water meter using a plurality of independent acoustic sensors, wherein acoustic data generated by the plurality of independent acoustic sensors is analyzed for leak detection data associated with the leak; and measuring water pressure, wherein pressure data generated as a result of measuring the water pressure is analyzed for leak detection data associated with the leak.

In an embodiment, the ultrasonic sensing can involve deploying ultrasonic sensors in a water distribution network to capture acoustic signals associated with leaks.

An embodiment can also involve employing a head-end system to receive and analyze the acoustic signals for identifying patterns indicative of leaks.

An embodiment can further involve generating alerts or notifications based on the identified patterns.

An embodiment can also involve comparing the pressure data with baseline pressure values to identify anomalies indicative of a leak.

In an embodiment, extracting acoustic leak signals using ultrasonic sensing, can further involve extracting 4KHz - 40KHz of an acoustic signal indicative of the leak using one or more ultrasonic transducers operating in a 1 MHz - 2 MHz frequency range.

An embodiment can further involve localizing the leak using comparative signal analysis and an intrinsic valve closure.

An embodiment can also involve localizing the leak using comparative signal analysis and an intrinsic valve closure in association with device-to-device communication comprising communications between one or more water meters in the water distribution network.

In an embodiment, a system for real-time leak detection in a water distribution network, can include one or more processors and a memory, the memory storing instructions to cause the one or more processors to perform: extracting acoustic leak signals using ultrasonic sensing; and performing one or more of the following operations: identifying acoustic noise signals generated by a leak, wherein the acoustic noise signals are analyzed to localize and determine a location of the leak; acoustic sensing in a water meter using a plurality of independent acoustic sensors, wherein acoustic data generated by the plurality of independent acoustic sensors is analyzed for leak detection data associated with the leak; and measuring water pressure, wherein pressure data generated as a result of measuring the water pressure is analyzed for leak detection data associated with the leak.

In an embodiment of the system, the ultrasonic sensing can include ultrasonic sensors deploy in a water distribution network to capture acoustic signals associated with leaks.

An embodiment of the system can include a head-end system that can receive and analyze the acoustic signals for identifying patterns indicative of leaks.

In an embodiment of the system, the instructions can be further configured to cause the one or more processors to perform generating alerts or notifications based on the identified patterns.

In an embodiment of the system, the instructions can be further configured to cause the one or more processors to perform comparing the pressure data with baseline pressure values to identify anomalies indicative of a leak.

In an embodiment of the system, extracting acoustic leak signals using ultrasonic sensing, can include extracting 4KHz - 40KHz of an acoustic signal indicative of the leak using one or more ultrasonic transducers operating in a 1MHz - 2 MHz frequency range.

In an embodiment of the system, the instructions can be further configured to cause the one or more processors to perform localizing the leak using comparative signal analysis and an intrinsic valve closure.

In an embodiment of the system, the instructions can be further configured to cause the one or more processors to perform localizing the leak using comparative signal analysis and an intrinsic valve closure in association with device-to-device communication comprising communications between one or more water meters in the water distribution network.

In an embodiment, a sensor for real-time leak detection in a water distribution network, can include one or more ultrasonic sensors, wherein acoustic leak signals can be extracted using ultrasonic sensing facilitated by the one or more ultrasonic sensors, and one or more of the following operations can be performed: identifying acoustic noise signals generated by a leak, wherein the acoustic noise signals are analyzed to localize and determine a location of the leak; acoustic sensing in a water meter using a plurality of independent acoustic sensors, wherein acoustic data generated by the plurality of independent acoustic sensors is analyzed for leak detection data associated with the leak; and measuring water pressure, wherein pressure data generated as a result of measuring the water pressure is analyzed for leak detection data associated with the leak.

BRIEF DESCRIPTION OF THE DRAWINGS

The accompanying figures, in which like reference numerals refer to identical or functionally-similar elements throughout the separate views and which are incorporated in and form a part of the specification, further illustrate the embodiments and, together with the detailed description, serve to explain the principles of the embodiments.

FIG. 1 illustrates a system for real-time leak detection, which may be implemented in accordance with an embodiment;

FIG. 2 illustrates a schematic diagram of a water distribution network comprising a distribution point and a group of water meters, in accordance with an embodiment;

FIG. 3 illustrates a system for real-time leak detection with an indication of a burst position, which may be implemented in accordance with an embodiment;

FIG. 4 illustrates a group of signals including acoustic and ultrasonic signals in accordance with or more embodiments; and

FIG. 5 illustrates a system for real-time leak detection involving the receipt of multiple device leak signals and performance of a correlation method for localizing the leak, in accordance with an embodiment;

FIG. 6 illustrates a method for real-time leak detection in a water distribution network, in accordance with an embodiment; and

FIG. 7 illustrates a schematic diagram of an example operating environment in accordance with one or more implementations described herein.

In the drawings described and illustrated herein, identical or similar parts and elements are generally indicated by identical reference numerals.

DETAILED DESCRIPTION

The particular values and configurations discussed in these non-limiting examples can be varied and are cited merely to illustrate one or more embodiments and are not intended to limit the scope thereof.

Subject matter will now be described more fully hereinafter with reference to the accompanying drawings, which form a part hereof, and which show, by way of illustration, specific example embodiments. Subject matter may, however, be embodied in a variety of different forms and, therefore, covered or claimed subject matter is intended to be construed as not being limited to any example embodiments set forth herein; example embodiments are provided merely to be illustrative. Likewise, a reasonably broad scope for claimed or covered subject matter is intended. Among other issues, subject matter may be embodied as methods, devices, components, or systems. Accordingly, embodiments may, for example, take the form of hardware, software, firmware, or a combination thereof. The following detailed description is, therefore, not intended to be interpreted in a limiting sense.

Throughout the specification and claims, terms may have nuanced meanings suggested or implied in context beyond an explicitly stated meaning. Likewise, phrases such as "in one embodiment" or "in an example embodiment" and variations thereof as utilized herein may not necessarily refer to the same embodiment and the phrase "in another embodiment" or "in another example embodiment" and variations thereof as utilized herein may or may not necessarily refer to a different embodiment. It is intended, for example, that claimed subject matter include combinations of example embodiments in whole or in part.

In general, terminology may be understood, at least in part, from usage in context. For example, terms such as "and," "or," or "and/or" as used herein may include a variety of meanings that may depend, at least in part, upon the context in which such terms are used. Generally, "or" if used to associate a list, such as A, B, or C, is intended to mean A, B, and C, here used in the inclusive sense, as well as A, B, or C, here used in the exclusive sense. In addition, the term "one or more" as used herein, depending at least in part upon context, may be used to describe any feature, structure, or characteristic in a singular sense or may be used to describe combinations of features, structures, or characteristics in a plural sense. Similarly, terms such as "a," "an," or "the", again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context.

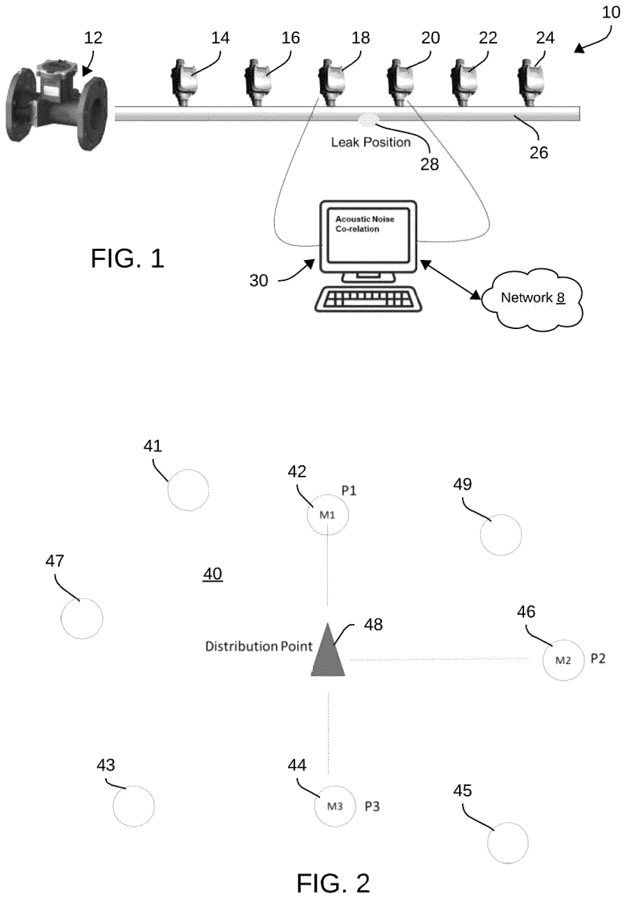

FIG. 1 illustrates a system 10 for real-time leak detection, which may be implemented in accordance with an embodiment. In the configuration of system 10 shown in FIG. 1, a flow tube 26 (e.g., a pipe) is shown which connects to a flow meter 12 shown at the left side of the figure and a group of water meters include water meters 12, 14, 16, 18, 20, 22, and 24. The system 10 can also include a head-end system 30 which can implement acoustic noise correlation. A leak position 28 is also indicated in FIG. 1.

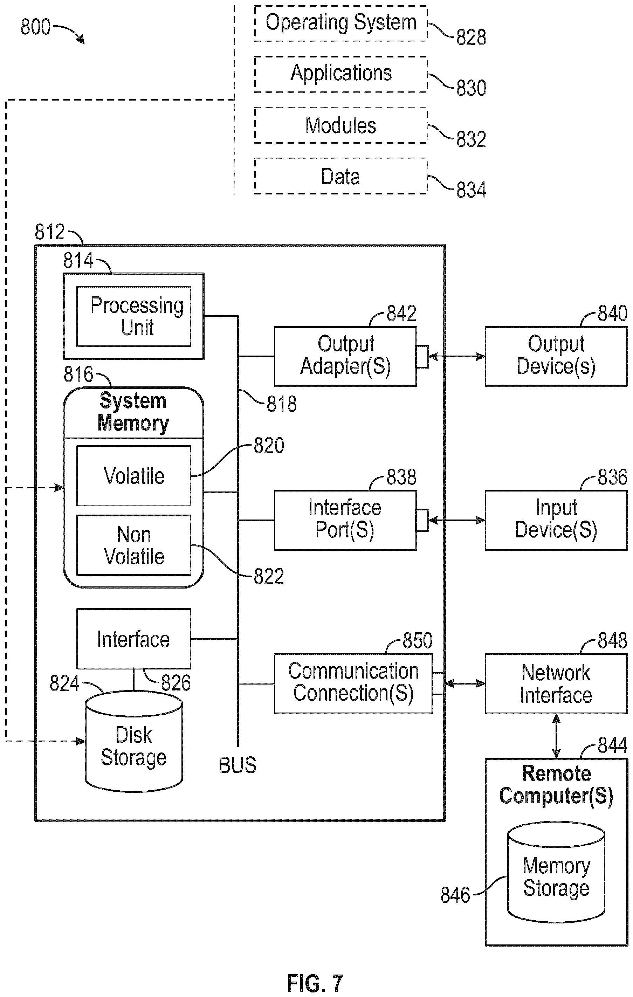

The head-end system 30 can be used for detecting water leaks and may be implemented as a central control or monitoring system that can be designed to identify and locate leaks in a water distribution network. The head-end system 30 can communicate with one or more of the flow meter 12 and the water meters 12, 14, 16, 18, 20, 22, and 24, and can use various sensors such as, for example, ultrasonic sensors, to detect anomalies in the water flow along with detecting other parameters such as, for example, pressure. The flow meter 12 and the water meters 12, 14, 16, 18, 20, 22, and 24 can be installed in a water distribution network to measure the amount of water flowing through a particular point, such as, for example, the leak position 28 shown in FIG. 1. These devices can provide data on water consumption and flow rates. Note that in some embodiments, the head-end system 30 may be implemented by or may be a computer such as, for example, the computer 812 shown in FIG. 7.

The flow meter 12 and/or the water meters 12, 14, 16, 18, 20, 22, and 24 may employ ultrasonic sensors, for example, in some embodiments. Such ultrasonic sensors can use ultrasonic technology to detect the sound frequencies associated with a water leaks such as, for example, a water leak at leak position 28 or elsewhere. When water escapes from a pipe, it often creates specific acoustic signals that can be picked up by ultrasonic sensors.

The head-end system 30 functions as a central monitoring and control system and can collect data from the water meters and sensors, processes the information, and analyzes it for abnormalities that may indicate a leak. As will be discussed in greater detail below the as part of the processing and analysis of the collected data, an acoustic noise correlation method can be implemented.

The system 10 additionally can include a data network 8, which can be a communications network that connects the water meters, ultrasonic sensors, and the head-end system. This network can allow real-time data transmission, enabling the head-end system 30 to continuously monitor the water distribution network. The head-end system 30 can use sophisticated algorithms to analyze the data received from the water meters and ultrasonic sensors. The head-end system 30 can perform an acoustic noise correlation with respect to the collected data to indicate a leak. This correlation operation may indicate unexpected changes in flow rates or unusual acoustic signals. Note that in some embodiments, the data network 8 may include one or more remote computers such as remote computer(s) 844 and memory storage 846 shown in FIG. 7.

If the head-end system 30 detects a potential water leak, it can generate alerts or notifications to alert water utility operators or relevant personnel. This allows them to take prompt action to locate and repair the leak, minimizing water loss and potential damage. The use of ultrasonic sensors is particularly effective because they can detect leaks based on the sound produced by escaping water, even if the leak is relatively small or in its early stages. This early detection is crucial for water utilities to address leaks promptly, reduce water wastage, and prevent damage to infrastructure.

The system 10 can achieve real-time leak detection using acoustic noise generated by leak and sensing them using ultrasonic sensors, pre-installed in the ultrasonic water meters 14, 16, 18, 20, 22, 24 and/or the water flow meter 12 during zero flow, mostly midnight, to isolate the ambient noise. There are two ways that ultrasonic water meter sensing technology can be used for water leak detection. First, the ultrasonic sensors can directly detect acoustic noise generated by water leaks and send this information (e.g., detected noise signals) to the head-end system 30 for correlation and determining the leak location. Second, adjacent meters (e.g., such as water meters 14, 16, 18, etc.) can exchange ultrasonic signals and measurement results can be used by head-end system 30 to analyze further for location detection.

The acoustic noise correlation performed by the head-end system 30 can involve analyzing acoustic signals or noises at different points in a system to identify correlations or patterns to provide an indication of leak detection in, for example, the flow tube 26. Acoustic sensors in, for example, the flow meter 12 and/or the water meters 12, 14, 16, 18, 20, 22, and 24 can be placed at different locations along the flow tube 26. These sensors can pick up the ambient acoustic signals or noises present in the system. The sensors continuously collect data in the form of acoustic signals over time. This data includes the ambient noise levels and any transient signals that may be present, such as those generated by a leak in the flow tube 26.

The collected data from different sensors are analyzed for correlation. Acoustic signals generated by certain events, like a leak, will propagate through the pipeline and arrive at different sensors at slightly different times. By analyzing the time delays and patterns of these signals, it is possible to correlate the signals and identify the location of the source. When a correlation is found between the signals at different sensor locations, it indicates a potential event such as a leak. The closer the correlation, the more likely it is that the source of the acoustic signals, and therefore the potential leak, can be located in that particular area. Once a correlation is established, algorithms can be used to triangulate the location of the source of the signals. This helps in pinpointing the area where a potential leak might have occurred.

Acoustic noise correlation is particularly useful in detecting leaks in water distribution networks or gas pipelines. When there's a leak, it often generates distinct acoustic signals that can be picked up by the sensors. By correlating these signals, operators can quickly identify the location of the leak, even if it's not visible. This approach can provide a non-intrusive and efficient way to monitor pipelines networks including, for example, the flow tube 26, and detect leaks in the early stages, minimizing water or gas loss and preventing potential damage.

Detecting leaks through the direct measurement of acoustic signals is possible by using acoustic sensors. Ultrasonic sensors placed between two meters can help identify interference that may indicate the presence of leaks. The head-end system 30 can then precisely locate the leak by correlating the data from the two meters, as illustrated by the leak position 28 in FIG. 1. The head-end system 30 may utilize head-end software or user datagram protocol (UDP) software to take into account additional environmental factors, such as water network details, pipe installation depth, and soil characteristics (e.g., sound conductivity), before signaling the presence of water leaks.

Note that the term "head-end system" can relate to the central control unit responsible for coordinating and processing information gathered by various sensors and meters in a network. In the context of leak detection, the head-end system 30 can utilize specialized software, such as head-end software or user datagram protocol (UDP) software. This software can take into account additional environmental factors, including water network details, pipe installation depth, and soil characteristics (e.g., sound conductivity). By considering these factors, the head-end system can ensure a more accurate analysis before signaling the presence of water leaks.

Note that UDP (User Datagram Protocol) is a transport layer protocol used in networking for communication over a network. It's one of the core protocols of the Internet Protocol (IP) suite. UDP can provide a connectionless, fast, and lightweight method of transmitting data between devices on a network. UDP software can relate to software that utilizes the UDP protocol for communication within a network. The head-end system 30 can employ UDP for certain aspects of its communication, such as, for example, for transmitting data efficiently and quickly.

UDP can be used in scenarios where low latency and real-time communication are more critical than guaranteed delivery of every packet. In contrast to TCP (Transmission Control Protocol), UDP may not establish a connection before transmitting data and may not provide error checking or retransmission of lost packets. This makes UDP suitable for certain applications where a small amount of packet loss is acceptable, and speed is a priority. UDP itself is a protocol, and "UDP software" can refer to software applications or systems that can utilize the UDP protocol for specific communication requirements in a described water network monitoring system such as, for example, system 10.

Proactive leak detection can be facilitated through water pressure analysis. A pressure sensor installed in the flow tube 26 can measure pressure, and analyzing differences from a peer can assist in identifying leak and burst events. Note that the term "peer" can relate to a similar or comparable entity or component. Specifically, the term peer may relate to a comparison with another similar element or measurement. For example, the use of the term "peer" herein can relate to comparing the pressure measurement in the flow tube 26 with the pressure measured in a similar or corresponding location or component. This kind of peer-to-peer analysis may be employed to identify discrepancies or anomalies that may indicate issues such as leaks or burst events.

FIG. 2 illustrates a schematic diagram of a water distribution network 40 comprising a distribution point 48 and a group of water meters 41, 42, 43, 44, 45, 46, 47 49, in accordance with an embodiment. Note the for the sake of describing the methodology below, water meter 42 can be referred to as M1, water meter 46 can be referred to as M2, and water meter 44 can be referred to as M3.

Let us consider M1, M2, and M3 as water meters which can be located for experiencing a similar environment, and which can be configured with D2D communication at very low power. During installation when there are no leak conditions, their water pressures are shared, and their differential pressure values are preserved for later monitoring. Let us consider that M1 has preserved the following:

Delta P12 = P1-P2 and
Delta P13 = P1- P3 such that when there is any leak in the path of DP to P1, P2 or P3 their respective delta values will exceed their threshold.

For example, if M1 experiences Delta P12 and Delta P13 both may exceed their prescribed limits. This can be an indicator of leakage in path of DP-M1, else if only Delta P12 or Delta P13 exceed their normal difference range, this can indicate DP-M2 or DP-M3 may be experiencing water leakages. This method can be used for other meters M2 and M3 as well and a common result can be recorded and addressed.

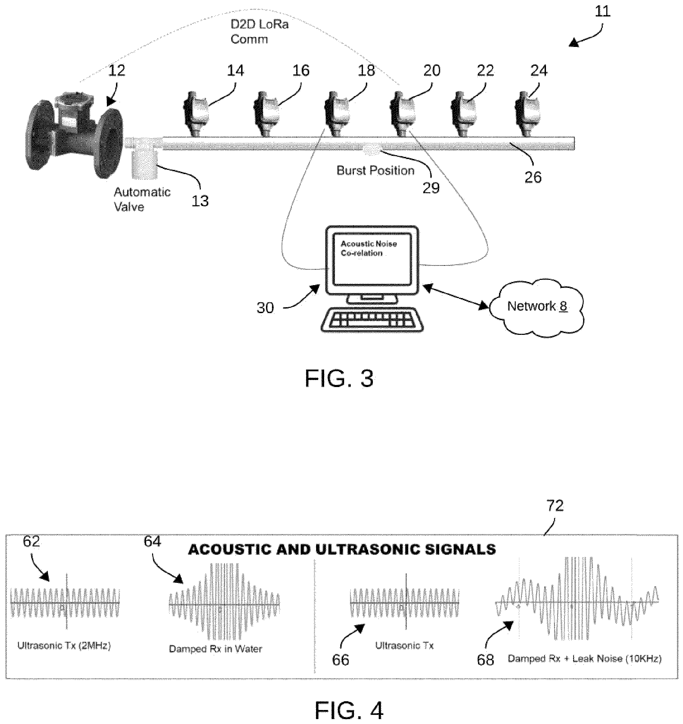

FIG. 3 illustrates a system 11 for real-time leak detection with an indication of a burst position 29, which may be implemented in accordance with an embodiment. Note that the embodiment shown in FIG. 3 represents an embodiment alternative to that shown in FIG. 1. That is, system 11 is similar to system 10 shown in FIG. 1 but contains some slight differences.

System 11 can use D2D communication (e.g., shown as "D2D LoRa Comm" in FIG. 3). D2D communication can be predominantly used to switch off a control valve 13 in case of a water burst event (e.g., burst position 29). In this case, the flow meter 12 can function as a distribution meter with the control valve 13 (e.g., automatic valve) installed, and which can be controlled from the remote head-end system 30 or through D2D communication from water meters such a burst is detected.

Note that D2D communication refers to direct communication between devices without the need for an intermediate network infrastructure. In the context of a water distribution network, D2D communication could involve direct communication between various devices, such as sensors or meters, within the network. This can be advantageous for a number of reasons. For example, D2D communication can reduce reliance on a central communication hub. Devices can communicate directly with each other, allowing for more decentralized and resilient communication networks.

Direct communication between devices often results in lower latency, as there are fewer intermediaries involved in transmitting and receiving data. This is crucial in applications where real-time or near-real-time data is essential, such as leak detection. D2D communication can be more energy-efficient compared to relaying data through multiple network nodes. Devices can communicate directly, minimizing the energy consumption associated with data transmission. D2D communication can be more scalable, especially in large networks. As the number of devices increases, direct communication can be a more efficient way to manage the network.

D2D LoRa Communication (Device-to-Device Communication using LoRa) involves LoRa (Long Range), which is a low-power, long-range wireless communication technology that is well-suited for the Internet of Things (IoT) applications. When applied to D2D communication in a water distribution network, for example, LoRa has specific advantages. For example, LoRa technology enables communication over long distances, making it suitable for large-scale water distribution networks where devices may be spread out across a wide area. LoRa devices are designed for low power consumption, extending the battery life of devices. This is beneficial in applications where devices may be deployed in remote or hard-to-reach locations. LoRa signals can also penetrate obstacles such as buildings and vegetation, ensuring communication reliability even in challenging environments.

The long-range capabilities of LoRa mean that fewer base stations may be required to cover a large area, resulting in cost-effective deployment and maintenance. In water distribution networks, the advantages of D2D communication, especially when using technologies like LoRa, can significantly enhance the efficiency of leak detection systems. For example, D2D communication allows for real-time monitoring of various points in the water distribution network, enabling rapid detection and response to leaks or anomalies. Furthermore, by facilitating direct communication between sensors and meters, D2D communication reduces dependence on a centralized infrastructure, making the network more robust.

The low-power characteristics of LoRa devices also contribute to the energy efficiency of devices, extending their operational life in the field. D2D communication, especially with technologies like LoRa, offers scalability for large and complex water distribution networks, ensuring effective communication across the entire infrastructure. D2D communication, particularly when utilizing technologies like LoRa, brings advantages such as reduced dependency on central infrastructure, low latency, energy efficiency, and scalability. These benefits are crucial for optimizing water distribution networks and enhancing leak detection capabilities.

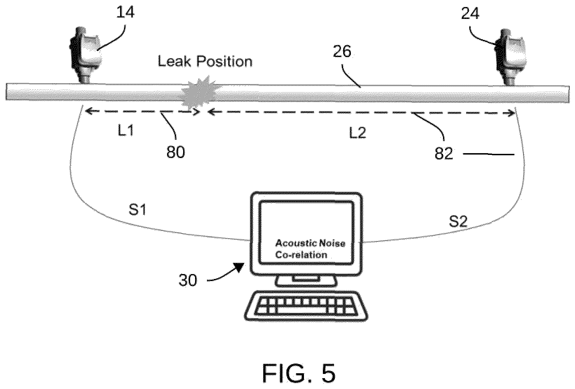

FIG. 4 illustrates a group of signals 72 including acoustic and ultrasonic signals in accordance with or more embodiments. The disclosed embodiments can involve leak signal extraction and a localization in an ultrasonic meter. The signals 72 shown in FIG. 4 are examples of signals that can be used for leak signal detection/extraction and localization in the disclosed ultrasonic meter solution. Examples of ultrasonic signals include ultrasonic signals 62 and ultrasonic signals 68. Examples of acoustic signals include acoustic signals 64 and acoustic signals 70. Ultrasonic signals are high frequency signals (~2MHz) that can be mixed along with a leak signal which is low frequency (4Hz - 20KHz) signal. When an ultrasonic meter such as water meters 14 and 20 shown in FIG. 5 receive modified/modulated reception, a leak signal can be extracted using digital signal processing methods. This can be performed at the device/meter level and can be communicated to head-end software using, for example, an NBIoT/LoRa RF interface or with handheld modules using a local interface (NFC or optical).

FIG. 5 illustrates a system 15 for real-time leak detection involving the receipt of multiple device leak signals and performance of a correlation method for localizing the leak, in accordance with an embodiment. The system 15 shown in FIG. 5 represents an alternative version of the embodiments of system 10 shown in FIG. 1 and system 11 shown in FIG. 3. Leak signal localization may be performed using, for example, head-end software that receives multiple device leak signals and performs a correlation method for localizing the leak.

Note that in FIG. 5, a first length 80 (L1) and a second length (L2) are shown with respect to the flow tube 26. Leak incident localization can be achieved using following method:

$$L1 = ((L1+L2) - T.C)/2$$

$$L2 = ((L1+L2) + T.C)/2$$

Where L1 and L2 are distance between water meters and leak position for two adjacent meters. The parameter T represents the time difference between signal reception for two adjacent meters and C is velocity of sound at provided water temperature. C is already computed in both device using ultrasonic reception and L1+L2 are known installation data.

The only unknown is T which need to be computed using cross correlation of received signals S1 and S2. Correlation methods like BCC, PHAT and ROTH can be used. Distribution pipe of water network function as a low pass filter with cutoff frequency decreasing as the distance from the leak increases. This impact over degree of correlation between signals as the relative distance between the leak and each sensor changes.

There is sufficient evidence that correlation can be achieved using audio signals samples. Water meter actuates ultrasonic sensors faster and keeps audio signal size length requirement minimal for supporting 15 years of device life.

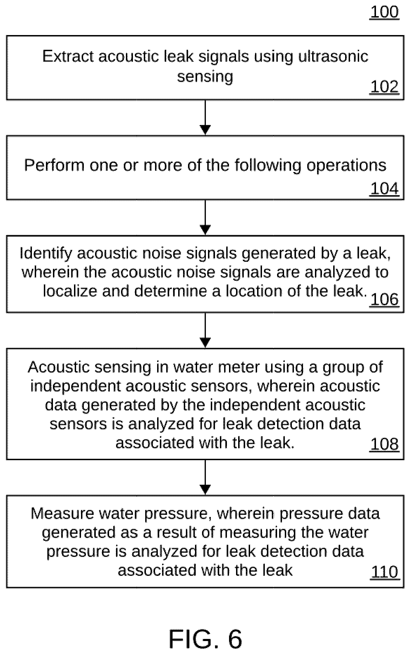

FIG. 6 illustrates a method 100 for real-time leak detection in a water distribution network, in accordance with an embodiment. As shown at block 102, a step or operation can be implemented for extracting acoustic leak signals using ultrasonic sensing. Then, as indicated at block 104, a step or operation can be initiated for performing one or more of the following operations, as shown in the subsequent blocks. For example, as depicted at block 106, a step or operation can be implemented for identifying acoustic noise signals generated by a leak, wherein the acoustic noise signals can be analyzed to localize and determine a location of the leak.

As shown at block 108, a step or operation can be implemented for acoustic sensing in a water meter using a plurality of independent acoustic sensors, wherein acoustic data generated by the plurality of independent acoustic sensors is analyzed for leak detection data associated with the leak. Next, as depicted at block 110, a step or operation can be implemented to measure water pressure, wherein pressure data generated as a result of measuring the water pressure is analyzed for leak detection data associated with the leak. It should be appreciated that the above steps or operations shown in the blocks may be performed in a different order or separately as part of different embodiments. In other words, the embodiments are not limited to the particular order shown in FIG. 7.

In the above description, specific details of various embodiments are provided. However, some embodiments may be practiced with less than all of these specific details. In other instances, certain methods, procedures, components, structures, and/or functions are described in no more detail than to enable the various embodiments, for the sake of brevity and clarity.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It should also be noted that at least some of the operations for the methods described herein may be implemented using software instructions stored on a computer useable storage medium for execution by a computer. As an example, an embodiment of a computer program product includes a computer useable storage medium to store a computer readable program.

FIG. 7 illustrates an example of a suitable operating environment 800 for implementing various aspects of this disclosure and which can also include a computer 812. The computer 812 can also include a processing unit 814, a system memory 816, and a system bus 818. The system bus 818 couples system components including, but not limited to, the system memory 816 to the processing unit 814. The processing unit 814 can be any of various available processors. Dual microprocessors and other multiprocessor architectures also can be employed as the processing unit 814.

The system bus 818 can be any of several types of bus structure(s) including the memory bus or memory controller, a peripheral bus or external bus, and/or a local bus using any variety of available bus architectures including, but not limited to, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Firewire (IEEE 1094), and Small Computer Systems Interface (SCSI). The system memory 816 can also include volatile memory 820 and nonvolatile memory 822. The basic input/output system (BIOS), containing the basic routines to transfer information between elements within the computer 812, such as during start-up, is stored in nonvolatile memory 822.

By way of illustration, and not limitation, nonvolatile memory 822 can include read only memory (ROM), programmable ROM (PROM), electrically programmable ROM (EPROM), electrically erasable programmable ROM (EEPROM), flash memory, or nonvolatile random-access memory (RAM) (e.g., ferroelectric RAM (FeRAM). Volatile memory 820 can also include random access memory (RAM), which acts as external cache memory. By way of illustration and not limitation, RAM is available in many forms such as static RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM.

Computer 812 can also include removable/nonremovable, volatile/non-volatile computer storage media. FIG. 7 illustrates, for example, a disk storage 824. Disk storage 824 can also include, but is not limited to, devices like a magnetic disk drive, floppy disk drive, tape drive, Jaz drive, Zip drive, LS-100 drive, flash memory card, or memory stick. The disk storage 824 also can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage 824 to the system bus 818, a removable or non-removable interface is typically used, such as interface 826.

FIG. 7 also depicts software that can act as an intermediary between users and the basic computer resources described in the suitable operating environment 800. Such software can also include, for example, an operating system 828. Operating system 828, which can be stored on disk storage 824, acts to control and allocate resources of the computer 812. System applications 830 can take advantage of the management of resources by operating system 828 through program modules 832 and program data 834, e.g., stored either in system memory 816 or on disk storage 824. It is to be appreciated that this disclosure can be implemented with various operating systems or combinations of operating systems. A user enters commands or information into the computer 812 through input device(s) 836. Input device(s) 836 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices can connect to the processing unit 814 through the system bus 818 via interface port(s) 838. Interface port(s) 838 can include, for example, a serial port, a parallel port, a game port, and a universal serial bus (USB). Output device(s) 840 may use some of the same type of ports as input device(s) 836.

Thus, for example, a USB port can be used to provide input to computer 812, and to output information from computer 812 to an output device 840. Output adapter 842 is provided herein to illustrate that there may be some output devices 840 like monitors, speakers, and printers, among other output devices 840, which require special adapters. The output adapters 842 include, by way of illustration and not limitation, video and sound cards that provide a means of connection between the output device 840 and the system bus 818. It should be noted that other devices and/or systems of devices provide both input and output capabilities such as remote computer(s) 844.

Computer 812 can operate in a networked environment using logical connections to one or more remote computers, such as remote computer(s) 844. The remote computer(s) 844 can be a computer, a server, a router, a network PC, a workstation, a microprocessor-based appliance, a peer device or other common network node and the like, and typically can also include many or all the elements described relative to computer 812. For purposes of brevity, only a memory storage device 846 is illustrated with remote computer(s) 844. Remote computer(s) 844 can be logically connected to computer 812 through a network interface 848 and then can be physically connected via communication connection 850.

Network interface 848 encompasses wire and/or wireless communication networks such as local-area networks (LAN), wide-area networks (WAN), cellular networks, etc. LAN technologies include Fiber Distributed Data Interface (FDDI), Copper Distributed Data Interface (CDDI), Ethernet, Token Ring and the like. WAN technologies include, but are not limited to, point-to-point links, circuit switching networks like Integrated Services Digital Networks (ISDN) and variations thereon, packet switching networks, and Digital Subscriber Lines (DSL). Communication connection(s) 850 refers to the hardware/software employed to connect the network interface 848 to the system bus 818. While communication connection 850 is shown for illustrative clarity inside computer 812, it can also be external to computer 812. The hardware/software for connection to the network interface 848 can also include, for exemplary purposes only, internal and external technologies such as, modems including regular telephone grade modems, cable modems and DSL modems, ISDN adapters, and Ethernet cards.

Embodiments may be implemented in or as a system, a method, an apparatus and/or a computer program product at any possible technical detail level of integration. The computer program product can include a computer readable storage medium (or media) having computer readable program instructions thereon for causing a processor to carry out aspects of the embodiments. The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a semiconductor storage device, or any suitable combination of the foregoing.

A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network can comprise copper transmission cables, optical transmission fibers, wireless transmission, routers, firewalls, switches, gateway computers and/or edge servers. A network adapter card or network interface in one or more computing/processing device receives computer readable program instructions from the network and forwards the computer readable program instructions for storage in a computer readable storage medium within the respective computing/processing device.

Computer readable program instructions for carrying out operations of various aspects of the embodiments can be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages.

The computer readable program instructions can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a local area network (LAN) or a wide area network (WAN), or the connection can be made to an external computer (for example, through the Internet using an Internet Service Provider). In some embodiments, electronic circuitry including, for example, programmable logic circuitry, field-programmable gate arrays (FPGA), or programmable logic arrays (PLA) can execute the computer readable program instructions by utilizing state information of the computer readable program instructions to customize the electronic circuitry, to perform aspects of the embodiments.

Aspects of the embodiments are described herein with reference to flowchart illustrations and/or block diagrams of methods, apparatus (systems), and computer program products according to embodiments of the invention. It can be understood that one or more blocks of the flowchart illustrations and/or block diagrams, and combinations of blocks in the flowchart illustrations and/or block diagrams, can be implemented by computer readable program instructions. These computer readable program instructions can be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer readable program instructions can also be stored in a computer readable storage medium that can direct a computer, a programmable data processing apparatus, and/or other devices to function in a manner, such that the computer readable storage medium having instructions stored therein comprises an article of manufacture including instructions which implement aspects of the function/act specified in the flowchart and/or block diagram block or blocks. The computer readable program instructions can also be loaded onto a computer, other programmable data processing apparatus, or other device to cause a series of operational acts to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the figures illustrate the architecture, functionality, and operation of possible implementations of systems, methods, and computer program products according to various embodiments of the embodiments. In this regard, one or more blocks in the flowchart or block diagrams can represent a module, segment, or portion of instructions, which comprises one or more executable instructions for implementing the specified logical function(s).

In some alternative implementations of the embodiments, the functions noted in the blocks can occur out of the order noted in the figures. For example, two blocks shown in succession can, in fact, be executed substantially concurrently, or the blocks can sometimes be executed in the reverse order, depending upon the functionality involved. It can also be noted that one or more block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

While the subject matter has been described above in the general context of computer-executable instructions of a computer program product that runs on a computer and/or computers, those skilled in the art can recognize that this disclosure also can or can be implemented in combination with other program modules. Generally, program modules include routines, programs, components, data structures, etc. that perform particular tasks and/or implement abstract data types. Moreover, those skilled in the art can appreciate that the inventive computer-implemented methods can be practiced with other computer system configurations, including single-processor or multiprocessor computer systems, mini-computing devices, mainframe computers, as well as computers, hand-held computing devices (e.g., PDA, cellular phone, etc.), microprocessor-based or programmable consumer or industrial electronics, and the like. The illustrated aspects can also be practiced in distributed computing environments where tasks are performed by remote processing devices that are linked through a communications network. However, some, if not all aspects of this disclosure can be practiced on stand-alone computers. In a distributed computing environment, program modules can be located in both local and remote memory storage devices.

As used in this application, the terms "component," "system," "platform," "interface," and the like, can refer to and/or can include a computer-related entity or an entity related to an operational machine with one or more specific functionalities. The entities disclosed herein can be either hardware, a combination of hardware and software, software, or software in execution. For example, a component can be, but is not limited to being, a process running on a processor, a processor, an object, an executable, a thread of execution, a program, and/or a computer.

By way of illustration, both an application running on a server and the server can be a component. One or more components can reside within a process and/or thread of execution and a component can be localized on one computer and/or distributed between two or more computers. In another example, respective components can execute from various computer readable media having various data structures stored thereon. The components can communicate via local and/or remote processes such as in accordance with a signal having one or more data packets (e.g., data from one component interacting with another component in a local system, distributed system, and/or across a network such as the Internet with other systems via the signal).

As another example, a component can be an apparatus with specific functionality provided by mechanical parts operated by electric or electronic circuitry, which is operated by a software or firmware application executed by a processor. In such a case, the processor can be internal or external to the apparatus and can execute at least a part of the software or firmware application. As yet another example, a component can be an apparatus that provides specific functionality through electronic components without mechanical parts, wherein the electronic components can include a processor or other means to execute software or firmware that confers at least in part the functionality of the electronic components. In an aspect, a component can emulate an electronic component via a virtual machine, e.g., within a server computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form. As used herein, the terms "example" and/or "exemplary" are utilized to mean serving as an example, instance, or illustration. For the avoidance of doubt, the subject matter disclosed herein is not limited by such examples. In addition, any aspect or design described herein as an "example" and/or "exemplary" is not necessarily to be construed as preferred or advantageous over other aspects or designs, nor is it meant to preclude equivalent exemplary structures and techniques known to those of ordinary skill in the art.

As it is employed in the subject specification, the term "processor" can refer to substantially any computing processing unit or device comprising, but not limited to, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Further, processors can exploit nano-scale architectures such as, but not limited to, molecular and quantum-dot based transistors, switches and gates, to optimize space usage or enhance performance of user equipment. A processor can also be implemented as a combination of computing processing units. In this disclosure, terms such as "store," "storage," "data store," data storage," "database," and substantially any other information storage component relevant to operation and functionality of a component are utilized to refer to "memory components," entities embodied in a "memory," or components comprising a memory. It is to be appreciated that memory and/or memory components described herein can be either volatile memory or nonvolatile memory or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, or nonvolatile random-access memory (RAM) (e.g., ferroelectric RAM (FeRAM). Volatile memory can include RAM, which can act as external cache memory, for example. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM (RDRAM). Additionally, the disclosed memory components of systems or computer-implemented methods herein are intended to include, without being limited to including, these and any other suitable types of memory.

What has been described above include mere examples of systems, computer program products, and computer-implemented methods. It is, of course, not possible to describe every conceivable combination of components, products and/or computer-implemented methods for purposes of describing this disclosure, but one of ordinary skill in the art can recognize that many further combinations and permutations of this disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim. The descriptions of the various embodiments have been presented for purposes of illustration but are not intended to be exhaustive or limited to the embodiments disclosed. Many modifications and variations can be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

It will be appreciated that variations of the above-disclosed and other features and functions, or alternatives thereof, may be desirably combined into many other different systems or applications. It will also be appreciated that various presently unforeseen or unanticipated alternatives, modifications, variations or improvements therein may be subsequently made by those skilled in the art which are also intended to be encompassed by the following claims.

**Claims**

1. A method for real-time leak detection in a water distribution network, comprising:

   extracting acoustic leak signals using ultrasonic sensing; and
   performing one or more of the following operations:

   identifying acoustic noise signals generated by a leak, wherein the acoustic noise signals are analyzed to localize and determine a location of the leak;
   acoustic sensing in a water meter using a plurality of independent acoustic sensors, wherein acoustic data generated by the plurality of independent acoustic sensors is analyzed for leak detection data associated with the leak; and
   measuring water pressure, wherein pressure data generated as a result of measuring the water pressure is analyzed for leak detection data associated with the leak.

2. The method of claim 1, wherein the ultrasonic sensing involves deploying ultrasonic sensors in a water distribution network to capture acoustic signals associated with leaks.

3. The method of claim 1, further comprising employing a head-end system to receive and analyze the acoustic signals for identifying patterns indicative of leaks.

4. The method of claim 3, further comprising generating alerts or notifications based on the identified patterns.

5. The method of claim 1, further comprising: comparing the pressure data with baseline pressure values to identify anomalies indicative of a leak.

6. The method of claim 1, wherein extracting acoustic leak signals using ultrasonic sensing, further comprises:
   extracting 4KHz - 40KHz of an acoustic signal indicative of the leak using one or more ultrasonic transducers operating in a 1MHz - 2 MHz frequency range.

7. The method of claim 1 further comprising localizing the leak using comparative signal analysis and an intrinsic valve closure.

8. The method of claim 1 further comprising localizing the leak using comparative signal analysis and an intrinsic valve closure in association with device-to-device communication comprising communications between one or more water meters in the water distribution network.

9. A system for real-time leak detection in a water distribution network, comprising:
   at least one processor and a memory, the memory storing instructions to cause the at least one processor to perform:

   extracting acoustic leak signals using ultrasonic sensing; and
   performing one or more of the following operations:

   identifying acoustic noise signals generated by a leak, wherein the acoustic noise signals are analyzed to localize and determine a location of the leak;
   acoustic sensing in a water meter using a plurality of independent acoustic sensors, wherein acoustic data generated by the plurality of independent acoustic sensors is analyzed for leak detection data associated with the leak; and
   measuring water pressure, wherein pressure data generated as a result of measuring the water pressure is analyzed for leak detection data associated with the leak.

10. The system of claim 9, wherein the ultrasonic sensing involves deploying ultrasonic sensors in a water distribution network to capture acoustic signals associated with leaks.

11. The system of claim 9 further comprising a head-end system that receives and analyzes the acoustic signals for identifying patterns indicative of leaks.

12. The system of claim 11 wherein the instructions are further configured to cause the at least one processor to perform: generating alerts or notifications based on the identified patterns.

13. The system of claim 9 wherein extracting acoustic leak signals using ultrasonic sensing, further comprises:
    extracting 4KHz - 40KHz of an acoustic signal indicative of the leak using one or more ultrasonic transducers operating in a 1MHz - 2 MHz frequency range.

14. A sensor for real-time leak detection in a water distribution network, comprising:
at least one ultrasonic sensor, wherein acoustic leak signals are extracted using ultrasonic sensing facilitated by the at least one ultrasonic sensor; and
performing one or more of the following operations:

identifying acoustic noise signals generated by a leak, wherein the acoustic noise signals are analyzed to localize and determine a location of the leak;
acoustic sensing in a water meter using a plurality of independent acoustic sensors, wherein acoustic data generated by the plurality of independent acoustic sensors is analyzed for leak detection data associated with the leak; and
measuring water pressure, wherein pressure data generated as a result of measuring the water pressure is analyzed for leak detection data associated with the leak.

15. The sensor of claim 14 further comprising a head-end system that receives and analyzes the acoustic signals for identifying patterns indicative of leaks, alerts or notifications are generated based on the identified patterns.

FIG. 1

FIG. 2

FIG. 3

FIG. 4

FIG. 5

100

| Extract acoustic leak signals using ultrasonic sensing 102 |

↓

| Perform one or more of the following operations 104 |

↓

| Identify acoustic noise signals generated by a leak, wherein the acoustic noise signals are analyzed to localize and determine a location of the leak. 106 |

↓

| Acoustic sensing in water meter using a group of independent acoustic sensors, wherein acoustic data generated by the independent acoustic sensors is analyzed for leak detection data associated with the leak. 108 |

↓

| Measure water pressure, wherein pressure data generated as a result of measuring the water pressure is analyzed for leak detection data associated with the leak 110 |

FIG. 6

800

Operating System ⌐828

Applications ⌐830

Modules ⌐832

Data ⌐834

812

814

Processing Unit

816

**System Memory**

820

Volatile

Non Volatile

822

818

Interface

824      826

Disk Storage

BUS

842

Output Adapter(S)

840

Output Device(s)

838

Interface Port(S)

836

Input Device(S)

850

Communication Connection(S)

848

Network Interface

844

**Remote Computer(S)**

846

Memory Storage

**FIG. 7**

Europäisches
Patentamt

European
Patent Office

Office européen
des brevets

# EUROPEAN SEARCH REPORT

Application Number

EP 24 21 8967

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/307466 A1 (BRENNAN JR WILLIAM JAMES [US] ET AL) 26 October 2017 (2017-10-26) * page 4, lines 26-29 * * page 9, lines 25-28 * * page 10, lines 12-15 * * page 11, lines 8-9 * * page 18, lines 27-28 * * page 21, lines 31-33 * * page 23, lines 28-29 * * claims 1-3 * | 1-15 | INV. G01M3/24 G01M3/28 |
| X | US 2015/153243 A1 (AL-SAYED WAHBA OSAMA MOHAMMAD [SA]) 4 June 2015 (2015-06-04) * paragraphs [0024], [0032] - [0033], [0035] - [0036], [0038] * * claims 1, 7-8 * | 1-15 | |
| X | WO 2023/030597 A1 (KAMSTRUP AS [DK]) 9 March 2023 (2023-03-09) * paragraphs [0066], [0106] - [0121] * * claims 1, 6 * | 1-15 | TECHNICAL FIELDS SEARCHED (IPC) G01M E03B |

The present search report has been drawn up for all claims

| Place of search | Date of completion of the search | Examiner |
|---|---|---|
| The Hague | 29 April 2025 | Oppo, Carla Ivana |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 24 21 8967

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2025

| Patent document cited in search report | Publication date | Patent family member(s) | Publication date |
|---|---|---|---|
| US 2017307466 A1 | 26-10-2017 | CA 2961798 A1 | 21-10-2017 |
| | | EP 3236227 A2 | 25-10-2017 |
| | | MX 385966 B | 18-03-2025 |
| | | US 2017307466 A1 | 26-10-2017 |
| US 2015153243 A1 | 04-06-2015 | CA 2872289 A1 | 25-05-2015 |
| | | US 2015153243 A1 | 04-06-2015 |
| WO 2023030597 A1 | 09-03-2023 | CN 117957396 A | 30-04-2024 |
| | | EP 4399439 A1 | 17-07-2024 |
| | | US 2025130134 A1 | 24-04-2025 |
| | | WO 2023030597 A1 | 09-03-2023 |

EPO FORM P0459

For more details about this annex : see Official Journal of the European Patent Office, No. 12/82